# EUROPÄISCHE PATENTSCHRIFT

(11) **EP 3 323 542 B1**
(45) Veröffentlichungstag und Bekanntmachung des Hinweises auf die Patenterteilung: **06.05.2020**
(21) Anmeldenummer: 17201665.1
(22) Anmeldetag: 14.11.2017
(51) Int. Cl.: B23D 61/12

(54) **PALETTENSÄBELSÄGEBLATT**
PALLET SABER SAW BLADE
LAME DE SCIE SABRE POUR PALETTES

(30) Priorität: 16.11.2016 DE 102016122050
(43) Veröffentlichungstag der Anmeldung: 23.05.2018
(73) Patentinhaber: MPS Sägen GmbH, 54332 Wasserliesch (DE)
(72) Erfinder: Barthuli, Alexander, 54338 Schweich (DE)
(74) Vertreter: Grundmann, Dirk

(56) Entgegenhaltungen:
- WO-A1-94/02296
- WO-A1-2012/166096
- CH-A- 262 109
- DE-A1-102012 217 094
- DE-U1- 29 613 157
- US-A- 2 646 094
- US-A- 5 295 426

## Beschreibung

### Gebiet der Technik

Die Erfindung betrifft ein Säbelsägeblatt mit einem Einspannende zum Einspannen in ein Futter einer Antriebsmaschine, wobei das Futter eine in Achsrichtung eines Schaftes des Sägeblattes gerichtete Hin- und Herbewegung macht, wobei das Säbelsägeblatt weiter eine auf einer Brust des Schaftes verlaufende Sägeverzahnung aufweist, bei der es sich um eine feine Verzahnung zum Sägen von Metallen, insbesondere Stahl handelt, wobei sich an das dem Einspannende gegenüberliegende Ende der Sägeverzahnung eine schräge Stirnkante anschließt.

### Stand der Technik

Stichsägeblätter mit einer Metallsägeverzahnung sind beispielsweise aus der DE 103 00 392 A1 vorbekannt. Bei einem üblichen Stichsägeblatt grenzt die geradlinig verlaufende verzahnte Brust unter Ausbildung eines spitzen Winkels von etwa 45° an die schräg verlaufende Stirnkante an.

Die DE 102012217094 A1 beschreibt ein Säbelsägeblatt gemäß dem Oberbegriff des Anspruchs 1, insbesondere ein Hubtrennwerkzeug mit einer schräg verlaufenden Stirnkante, die als Schneide ausgebildet ist. Eine Spitze des Werkzeuges ist geringfügig verrundet, wobei die Rundungslinie in einer Fasenfläche der Schneide verläuft.

Dokument DE 10 2012 217094 A1 offenbart auch ein Säbelsägeblatt mit einem Einspannende zum Einspannen in ein Futter einer Antriebsmaschine, mit einem auf seiner Brust eine Metallsägeverzahnung aufweisenden Schaft, mit einer stumpfwinklig an das vom Einspannende weg weisende Ende der Sägeverzahnung angrenzenden schrägen, als Schneide ausgebildeten Stirnkante, an die eine Ausbildung einer Spitze angrenzt.

Die US 5, 295,426 beschreibt ein Sägeblatt mit einer brustseitigen Sägeverzahnung und einer rückwärtigen geschweiften Schneide. Die beiden Längskanten treffen sich unter Ausbildung einer Spitze.

Die CH 262109 beschreibt ein eine Schneidkante aufweisendes, an beiden Schmalseiten verzahntes Werkzeug.

Bei einem Säbelsägeblatt, welches von Reparaturwerkstätten zum Instandsetzen von Paletten benutzt wird, grenzt die stumpfe Stirnkante unter Ausbildung eines Winkels an die Verzahnung an. Das Palettensäbelsägeblatt wird dazu verwendet, von schadhaften Paletten einzelne beschädigte Bretter zu lösen. Die Bretter sind untereinander vernagelt, gegebenenfalls aber auch verschraubt. Mit dem Palettensäbelsägeblatt soll ein Nagel oder eine Schraube im Bereich der Fuge zwischen zwei durch den Nagel oder die Schraube miteinander verbundenen Bretter getrennt werden. Hierzu muss das Palettensäbelsägeblatt in die Fuge zwischen zwei Brettern eingesteckt werden.

Zum Stand der Technik gehören darüber hinaus Gipskarton-Handsägen mit einem Griff und einem langgestreckten Sägeblatt, wobei die Brust eine Grobverzahnung aufweist und der Rücken spitzwinklig zur Brust verläuft und unter Ausbildung einer scharf geschliffenen Spitze in eine stirnseitige Schrägkante übergeht, so dass die Säge in eine Gipskartonplatte eingestochen werden kann.

### Zusammenfassung der Erfindung

Der Erfindung liegt die Aufgabe zugrunde, ein Säbelsägeblatt, welches bei der Reparatur von Paletten verwendet wird, gebrauchsvorteilhaft weiterzubilden.

Gelöst wird die Aufgabe durch die in den Ansprüchen angegebene Erfindung.

Gemäß einem ersten Aspekt der Erfindung wird vorgeschlagen, dass eine stumpfwinklig an die sägeverzahnte Brust angrenzende Stirnkante als Schneide ausgebildet ist. Die Ausbildung der Stirnkante als Schneide vereinfacht das Hineinstecken der Spitze des Säbelsägeblattes in die Fuge zwischen zwei aufeinander liegenden Brettern einer Palette. Die beiden Bretter werden beim Einbringen der Schneide auseinandergespreizt, so dass das von einem Flachstreifen gebildete Sägeblatt in den Spalt zwischen zwei Brettern eingeschoben werden kann. Die gerundete Spitze ist dabei von Vorteil. Eine scharfe Spitze, beispielsweise eine angeschliffene Spitze, hätte zur Folge, dass sie wegen der Hin- und Herbewegung des Schaftes in das Brett einstechen würde. Die aufgrund ihrer Verrundung stumpfe Spitze kann dagegen auf einem Brett der Palette hin- und her gleiten. Hierzu ist insbesondere vorgesehen, dass die vom Rücken gebildete Schmalkante des Schaftes in der Spitze in eine Kreiszylindermantelfläche übergeht. Diese Kreiszylindermantelfläche bildet eine Spitzenverrundung aus. Aus der Kreiszylindermantelfläche entspringt die scharfe Stirnkante. Der schräge Verlauf der Schneide führt zu einem kraftoptimierten Auseinanderspreizen zweier dicht und berührend aufeinander liegender Bretter der Palette. In einer Weiterbildung der Erfindung ist vorgesehen, dass die Schneide von einer Fase der Stirnkante des Sägeblattes ausgebildet ist. Die Fase erstreckt sich dabei bevorzugt über die gesamte Materialstärke des Sägeblattes, so dass die Schneide in einer Breitseite liegt und eine Begrenzungslinie der Fase in der gegenüberliegenden Breitseite parallel zur Schneide verläuft. Die Begrenzungslinie verläuft dabei bevorzugt durch den Mittelpunkt des Kreiszylinders, der den Verlauf der Schmalkante in der Spitze definiert.

Ein weiterer Aspekt der Erfindung betrifft ein Säbelsägeblatt, bei dem sich an die stumpfwinklig an die brustseitige Sägeverzahnung anschließende als Schneide ausgebildete Stirnkante eine rückwärtige Verschmälerung anschließt. Die rückwärtige Längskante des Sägeblattes kann unter Ausbildung einer Rundung oder einer scharfen Spitze an die von der Stirnkante ausgebildete Schneide angrenzen. Die Verschmälerung wird insbesondere von einem Abschnitt der rückwärtigen Schmalkante des Schaftes ausgebildet, der sich auf einer Bogenlinie erstreckt, wobei die Bogenlinie bevorzugt zum Schaft hin gekrümmt ist. Im Bereich der Spitze verläuft der Abschnitt des Rückens, der der Verschmälerung örtlich zugeordnet ist, bevorzugt zunächst in etwa parallel zur brustseitigen Sägeverzahnung in Richtung auf das Einspannende, wobei sich der Winkel zur brustseitigen Sägeverzahnung mit zunehmendem Abstand von der Spitze vergrößert. Die Spitze liegt bevorzugt in einem mittleren Bereich des Schaftes und insbesondere auf einer Längsmittelebene des Schaftes, wobei die Spitze auch auf einer brustseitigen Hälfte des von einer Mittellinie geteilten Schaftes liegen kann. Der geschweift verlaufende Abschnitt der rückwärtigen Schmalkante der Verschmälerung ist bevorzugt länger als die von der Stirnkante ausgebildete Schneide. Sie ist bevorzugt mindestens doppelt so lang, mindestens dreimal so lang oder mindestens fünfmal so lang. Durch eine derart ausgebildete keilförmige Spitze wird der Eintauchvorgang in eine genagelte Holzverbindung optimiert. Mit der Verjüngung der Spitze lässt sich ein höherer Druck erzeugen, der das Eindringen in die Fuge zwischen zwei Brettern einer Palette erleichtert. Bei der Hin- und Herbewegung kann eine der beiden Schneiden über eines der Bretter gleiten. Auch hier kann die Spitze von einer stumpfen Verrundung ausgebildet sein.

Ein weiterer Aspekt der Erfindung betrifft ein Säbelsägeblatt, bei dem an die Spitze eine rückwärtige Sägeverzahnung, eine Metallsägeverzahnung, angrenzt. Auch hier verläuft die Stirnkante unter Ausbildung einer Schneide stumpfwinklig zur brustseitigen Sägeverzahnung. Mit der doppelseitigen Sägeverzahnung ist es möglich, mitten in eine genagelte Holzverbindung einzutauchen. Mehrere Nägel können durchtrennt werden, auch wenn das Säbelsägeblatt zwischen zwei Nägeln in den Spalt zwischen zwei genagelten Brettern gebracht ist. Das Sägeblatt braucht dabei nicht aus der Fuge herausgenommen zu werden. Ein Nagel wird beispielsweise mit der brustseitigen Sägeverzahnung durchtrennt. Ein anderer Nagel wird mit der rückwärtigen Verzahnung durchtrennt. Bei beiden Verzahnung handelt es sich um eine Feinverzahnung. Es ist aber auch möglich, die beiden Verzahnung unterschiedlich zu gestalten, beispielsweise kann eine Verzahnung grob verzahnt sein, um Schnitte in Holz durchzuführen. Die rückwärtige Sägeverzahnung verläuft unter Ausbildung einer stumpfen Verrundung in die von der Stirnseite ausgebildete Schneide.

Bei sämtlichen Aspekten der Erfindung kann ferner vorgesehen sein, dass die geradlinig verlaufende Brust parallel zum geradlinig verlaufenden Rücken verläuft. Der stumpfe Winkel, mit dem die Verzahnung an die Schneide angrenzt, liegt bevorzugt in einem Bereich zwischen 110° und 150°. Bevorzugt beträgt der Winkel 130°. Der Fasenwinkel kann in einem Bereich zwischen 15° und 35° liegen. Bevorzugt liegt der Winkel zwischen 20° und 25°. Der Schaft besitzt bevorzugt eine Minimallänge von 150 mm und ist vorzugsweise nicht länger als 300 mm. Bei der Sägeverzahnung handelt es sich um eine Metallsägeverzahnung, bei der der Abstand zweier benachbarter Zahnspitzen im Bereich zwischen 1 mm und 2 mm liegt. Das Sägeblatt ist bevorzugt aus Werkzeugstahl gefertigt und besitzt eine Materialstärke von etwa 1 mm und einen Abstand von Brust zu Rücken von etwa 25 mm.

### Kurze Beschreibung der Zeichnungen

Ausführungsbeispiele der Erfindung werden nachfolgend anhand beigefügter Zeichnungen erläutert. Es zeigen:
- Fig. 1: die Draufsicht auf ein erstes Ausführungsbeispiel;
- Fig. 2: eine Sicht auf die Spitze 6 und die sich daran anschließende Stirnkante 7;
- Fig. 3: vergrößert den Ausschnitt III - III in Fig. 1;
- Fig. 4: vergrößert den Schnitt gemäß der Linie II - II in Fig. 1;
- Fig. 5: die Draufsicht auf ein zweites Ausführungsbeispiel;
- Fig. 6: die Draufsicht auf ein drittes Ausführungsbeispiel;
- Fig. 7: die Draufsicht auf ein viertes Ausführungsbeispiel;
- Fig. 8: die Draufsicht auf ein fünftes Ausführungsbeispiel;
- Fig. 9: die Draufsicht auf ein sechstes Ausführungsbeispiel.

### Beschreibung der Ausführungsformen

Bei den Ausführungsbeispielen handelt es sich um ein Säbelsägeblatt, welches speziell für die Reparatur beschädigter Paletten ausgebildet ist. Das Säbelsägeblatt besitzt ein Einspannende 1, welches eine Umrisskontur aufweist, die derart gestaltet ist, dass das Sägeblatt mit dem Einspannende 1 in ein Futter einer Antriebsmaschine eingesteckt und darin befestigt werden kann. Das Futter der Antriebsmaschine wird von einem Antriebsmotor oszillierend hin- und herbewegt.

An das Einspannende 1 schließt sich ein Schaft 2 an, der eine Breite von etwa 25 mm und eine Länge von etwa 180 mm bis 190 mm besitzt. Die geradlinig verlaufende Brust 3 des Schaftes 2 ist mit einer Metallsägeverzahnung versehen, die eine Länge von etwa 184 mm aufweist. Der Abstand zweier benachbarter Zähne beträgt etwa 1,8 mm. Die Zähne der Sägeverzahnung 3 sind auf eine Schränkweite von etwa 1,6 mm geschränkt.

Der von einem etwa 1 mm starken Stahlstreifen gebildete Schaft 2 besitzt einen parallel zur Brust 3 verlaufenden Rücken 4. An das vom Einspannende weg weisende Ende der verzahnten Brust 3 schließt sich unter Ausbildung eines stumpfen Winkels α eine Stirnkante 7 an. Der Winkel α beträgt bei den Ausführungsbeispielen etwa 130°. Der Rücken 4 geht unter Ausbildung einer Spitze 6 in die Stirnkante 7 über.

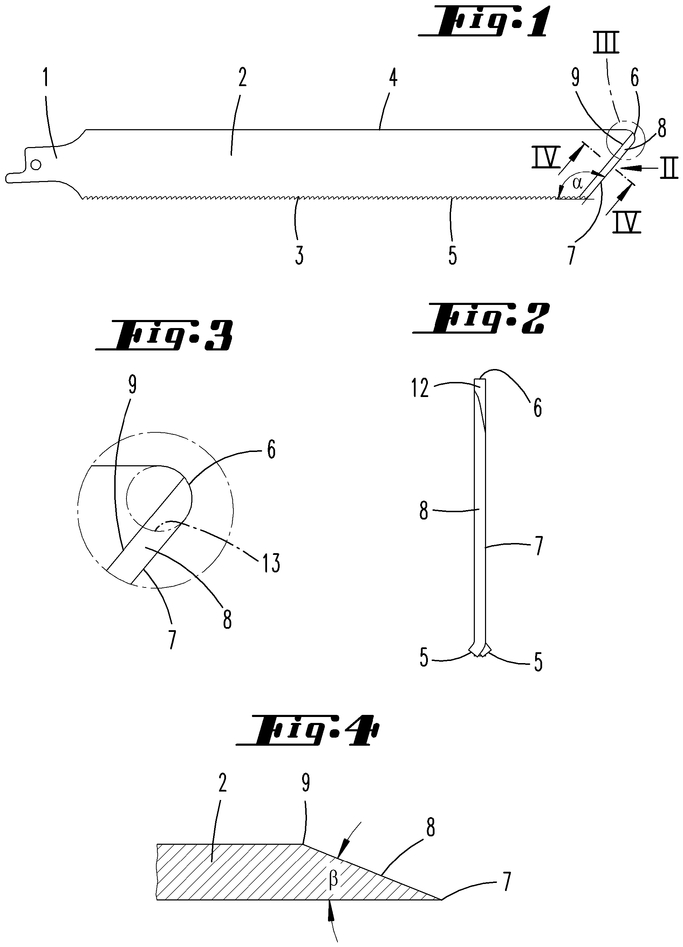

Bei dem in den Figuren 1 bis 4 dargestellten Ausführungsbeispiel geht der Rücken 4 unter Ausbildung einer gerundeten Spitze 6 in die Stirnkante 7 über. Der Rundungsradius liegt bei etwa 2 mm bis 3 mm. Der Rücken 4 besitzt eine Schmalkante, deren Breite der Materialstärke des Schaftes 2 entspricht. Im Bereich der Spitze 6 geht die geradlinig sich über den Rücken 4 erstreckende Schmalkante knickstellfrei in eine Zylindermantelfläche über. Die Zylindermantelfläche geht dann knickstellenfrei in die Stirnkante 7 über.

Erfindungsgemäß ist die schräg sowohl zur Brust 3 als auch zum Rücken 4 verlaufende geradlinige Stirnkante 7 als Schneide ausgebildet. Fertigungstechnisch wird dies dadurch erreicht, dass das Stirnende des Schaftes 2 beispielsweise durch Schleifen oder Fräsen mit einer Fase 8 versehen wird. Eine Breitseitenfläche des Schaftes 2 bildet mit der Fläche der Fase 8 einen Fasenwinkel β, der beim Ausführungsbeispiel etwa 22° beträgt. Die Fase 8 geht unter Ausbildung einer Begrenzungslinie 9, die parallel zur Schneide 7 verläuft, in die gegenüberliegende Breitseitenfläche des Schaftes 2 über. Die Begrenzungslinie 9 verläuft dabei durch das Zentrum des Zylinders, dessen Mantelfläche den Schmalseitenverlauf im Bereich der Spitze 6 definiert.

Das in den Zeichnungen dargestellte Säbelsägeblatt ist insbesondere für die Reparatur defekter Paletten ausgelegt. Bei der Reparatur defekter Paletten müssen defekte Holzbretter, die miteinander vernagelt sind, möglichst ohne Beschädigung noch brauchbarer Bretter von der Palette gelöst werden. Hierzu müssen die Nägel im Bereich der Fuge zwischen zwei miteinander befestigten Brettern durchtrennt werden. Dies erfolgt mittels der Metallsägeverzahnung des Schaftes 2, indem das Säbelsägeblatt von der Antriebsmaschine in Erstreckungsrichtung des Schaftes hin- und herbewegt wird. Um die verzahnte Brust 3 in die Anwendungsstellung zu bringen, muss der Schaft 2 zwischen die voneinander zu trennenden Bretter der Palette gebracht werden. Dies erfordert ein geringfügiges voneinander Abspreizen der beiden Bretter, damit das Sägeblatt in den dadurch entstandenen Spalt zwischen die Bretter gebracht werden kann.

Die erfindungsgemäße Schneide und die sich daran anschließende Keilfläche der Fase 8 ermöglicht es, mit dem Säbelsägeblatt ohne die Verwendung weiterer Werkzeuge die beiden Bretter in ausreichender Weise voneinander zu beabstanden. Die gerundete Spitze 6 des in den Figuren 1 bis 4 dargestellten Ausführungsbeispiels entfaltet die folgende technische Wirkung: Üblicherweise besitzt eines der beiden miteinander verbundenen Bretter eine freie Oberfläche, auf der die gerundete Spitze 6 des sich hin- und herbewegenden Sägeblattes aufgesetzt werden kann. Indem die Spitze 6 gerundet ist und zufolge des Fasenanschliffs stumpf ist, kann die Spitze 6 des in einem spitzen Winkel auf die freie Oberfläche des Brettes aufgesetzten Sägeblattes über die Oberfläche des Brettes gleiten und so bis an das zu entfernende Brett gebracht werden. Die Hin- und Herbewegung führt dann dazu, dass der sich von der Fase 8 und der Schneide 7 ausgebildete Keil stoßend in die Fuge zwischen den beiden Brettern hinein verlagert und dabei die beiden Bretter geringfügig voneinander beanstandet, so dass der Schaft 2 weiter in die Fuge hineingeschoben werden kann, bis die Schneide 7 oder die Brust 3 an den zu durchtrennenden Nagel anstößt. Tritt zunächst die Schneide 7 gegen den Nagel, so bewirkt der stumpfe Winkel a, dass das Sägeblatt zum Rücken 4 hin ausweicht, so dass die Sägeverzahnung 5 am Nagel angreifen kann, um ihn zu zertrennen.

Die Figur 3 zeigt vergrößert den Spitzenbereich 6, als Rundung ausgebildet ist. Mit der gestrichelten Linie 13 ist eine Kreisbogenlinie dargestellt, entlang welcher die Randkante der Breitseite des Sägeblatts verläuft. Der Mittelpunkt des Kreisbogens 13 liegt in einer Begrenzungslinie 9 der Fase 8.

Aus der Figur 2 ist zu entnehmen, dass die Spitze 6 einen stumpfen Rundungsabschnitt 12 ausbildet, der unter Ausbildung einer schrägen Kante in die Schneide 7 übergeht.

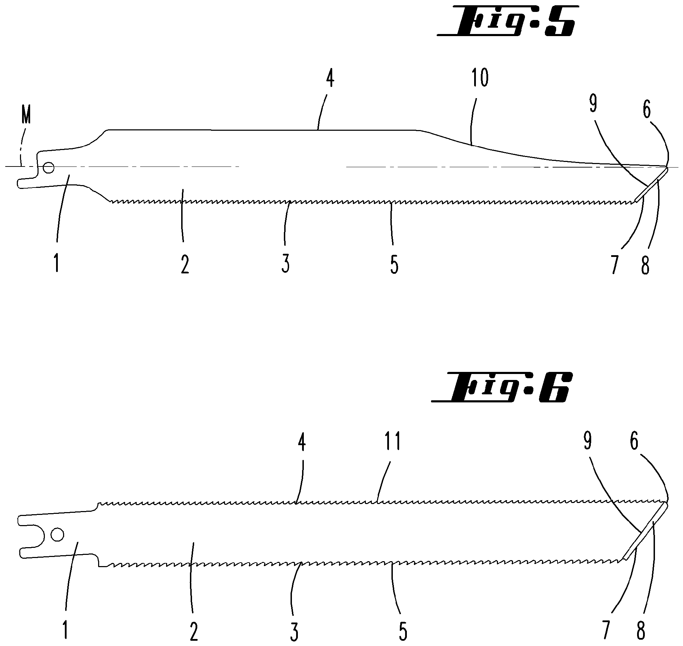

Bei dem in der Figur 5 dargestellten Ausführungsbeispiel besitzt der Rücken 4 des Schaftes 2 eine rückwärtige Verschmälerung 10. Die rückwärtige Verschmälerung 10 erstreckt sich nur über den an die Spitze 6 angrenzenden Endabschnitt des Schaftes 2. Die rückwärtige Verschmälerung 10 wird von einem Schmalkantenabschnitt des Rückens 4 gebildet, der auf einer Bogenlinie verläuft, die mindestens fünfmal so lang ist wie die von der Stirnkante 7 ausgebildete Schneide. Der an die Spitze 6 angrenzende Abschnitt der rückwärtigen Schmalkante des Schaftes 2 verläuft bevorzugt in etwa parallel zu der Längsmittelebene M, so dass die Breite des Sägeblattes als Folge der Verschmälerung 10 in dem unmittelbar an die Spitze 6 angrenzenden Bereich auf die Hälfte reduziert ist. Die rückwärtige Schmalkante geht auch hier unter Ausbildung einer Verrundung, wie sie zum ersten Ausführungsbeispiel beschrieben worden ist, in die Stirnkante 7 über.

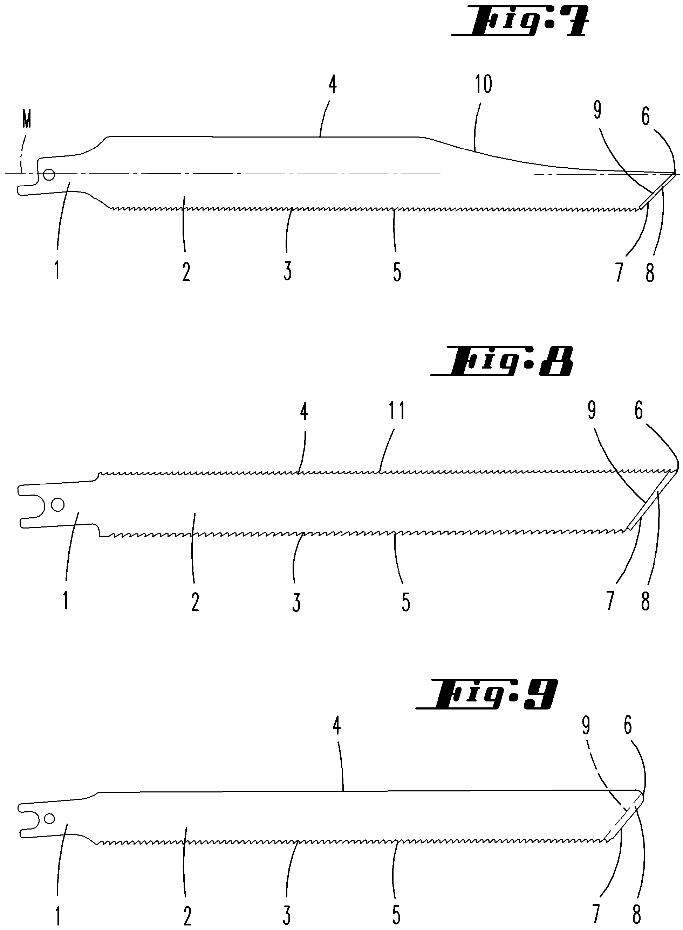

Bei einer Variante, die in der Figur 7 dargestellt ist, geht die rückwärtige Schmalkante unter Ausbildung einer scharfen Spitze in die Schneide 7 über. In einem nicht bevorzugten Ausführungsbeispiel kann die Schmalkante der Verschmälerung 10 auch als Schneide ausgebildet sein. Die beiden Schneiden treffen sich in einem Punkt, so dass sich in einer Rundung treffen.

Eine Längsmittellinie durch den Schaft 2, die parallel zum Rücken 4 und zur brustseitigen Verzahnung 5 verläuft, teilt die Breitseitenfläche des Schaftes 2 in zwei Hälften. Die Spitze 6 kann auf der Längsmittelebene M liegen. Die Spitze 6 kann auch in der Hälfte, in die die Längsmittelebene M die Breitseite des Schaftes 2 teilt, liegen, die der brustseitigen Sägeverzahnung zugeordnet ist. Die Schmalkante der Verschmälerung 10 verläuft auf einer Bogenlinie, die zum Schaft 2 hin einwärts gewölbt ist. Hierdurch verläuft die rückwärtige Schmalkante in dem unmittelbar an die Spitze 6 angrenzenden Bereich nahezu parallel zur Mittellinie M, wobei sich ihr Winkel zur Mittellinie M mit zunehmendem Abstand von der Spitze 6 vergrößert, bevor die rückwärtige Schmalkante unter Ausbildung eines Winkels von 10° bis 20° in den geradlinig verlaufenden Rücken 4 übergeht.

Mit der beschriebenen Maßnahme wird eine Stirnkantenschneide mit gegenüber dem in den Figuren 1 bis 4 dargestellten ersten Ausführungsbeispiel verkürzter Erstreckungslänge erreicht, die bei der Hin- und Herbewegung des Säbelsägeblattes mit höherem Druck in die Fuge zwischen zwei Brettern eintauchen kann.

Bei dem in der Figur 8 dargestellten Beispiel nicht Teil der Erfindung besitzt nicht nur die Brust 3 eine Sägeverzahnung 5, sondern auch der Rücken 4 eine Sägeverzahnung 11. Die beiden Verzahnungen können gleichartig ausgebildet sein, indem beide Verzahnungen eine Metallsägeverzahnung mit den oben beschriebenen Eigenschaften ausbilden. Die rückwärtige Verzahnung 11 kann aber auch eine Grobverzahnung sein. Die beiden Verzahnungen 5, 11 erstrecken sich geradlinig und verlaufen parallel zueinander. Die brustseitige Verzahnung 5 geht unter Ausbildung eines spitzen Winkels in die stirnseitige Schneide über, die entlang der geradlinigen Stirnkante 7 verläuft. Die Stirnkante 7 geht unter Ausbildung eines spitzen Winkels im Bereich einer Spitze 6 in die rückwärtige Verzahnung 11 über. Auch hier verläuft die Erstreckung der Stirnkante 7 zur Erstreckung der Brust 3 stumpfwinklig in dem oben angegebenen Winkelbereich. Der spitze Winkel zwischen Stirnkante 7 und rückwärtiger Sägeverzahnung 11 wird von einer Verrundung gebildet, wie sie eingangs zum ersten Ausführungsbeispiel beschrieben worden ist. In dem in der Figur 8 dargestellten Ausführungsbeispiel grenzt die Schneide 7 in einer punktförmigen Spitze an die rückwärtige Sägeverzahnung.

Die Figur 9 zeigt ein sechstes Ausführungsbeispiel der Erfindung, wobei hier der Schaft 2 dieselbe Gestalt aufweist wie der Schaft 2 des in den Figuren 1 bis 4 dargestellten ersten Ausführungsbeispiels. Das Einspannende 1 ist hingegen geringfügig in Richtung auf die verzahnte Brust 3 abgewinkelt. Eine parallel zu den beiden Längskaten des Einspannendes gezogene Mittellinie durch das Einspannende 1 verläuft hier in einem Winkel von < 180° zu einer Mittellinie, die parallel zu Brust 3 und Rücken 4 des Schaftes 2 in dessen Mitte verläuft. Er beträgt beim Ausführungsbeispiel 174° (+/- 3°). Die Länge des Schaftes 2 beträgt hier etwa 190 mm (+/- 20 mm), die Breite des Schaftes 2 beträgt hier 19 mm (+/- 2 mm). Die Spitze 6 ist mit einem Radius von 3 mm verrundet.

Alle offenbarten Merkmale sind für sich, aber auch in Kombination untereinander erfindungswesentlich.

### Liste der Bezugszeichen

- 1: Einspannende
- 2: Schaft
- 3: Brust
- 4: Rücken
- 5: Sägeverzahnung
- 6: Spitze
- 7: Stirnkante
- 8: Fase
- 9: Begrenzungslinie
- 10: Verschmälerung
- 11: rückwärtige Sägeverzahnung
- 12: stumpfer Spitzenabschnitt
- 13: Kreisbogen

- M: Längsmittellinie

## Patentansprüche

1. Säbelsägeblatt mit einem Einspannende (1) zum Einspannen in ein Futter einer Antriebsmaschine, mit einem auf seiner Brust (3) eine Metallsägeverzahnung (5) aufweisenden Schaft (2), mit einer stumpfwinklig an das vom Einspannende (1) weg weisende Ende der Sägeverzahnung (5) angrenzenden schrägen, als Schneide ausgebildeten Stirnkante (7), an die unter Ausbildung einer gerundeten Spitze (6) ein Rücken (4) des Schaftes (2) angrenzt, **dadurch gekennzeichnet, dass** die Schmalkante des Schaftes (2) im Bereich der Spitze (6) auf einem Abschnitt einer Kreiszylindermantelfläche verläuft, die Schneide (7) in einer Breitseite des Schaftes (2) liegt und eine parallel zur Schneide (7) verlaufende Begrenzungslinie (9) der die Schneide ausbildenden Fase (8) in der gegenüberliegenden Breitseite etwa durch die Mitte des Kreiszylinders geht.

2. Säbelsägeblatt nach Anspruch 1, **dadurch gekennzeichnet, dass** der Rundungsradius der Spitze (6) im Bereich zwischen 2 mm und 3 mm liegt.

3. Säbelsägeblatt nach einem der vorangehenden Ansprüche, **dadurch gekennzeichnet, dass** der Schaft (2) in seinem an die Spitze (6) angrenzenden Endbereich eine Verschmälerung (10) aufweist.

4. Säbelsägeblatt nach Anspruch 3, **dadurch gekennzeichnet, dass** die die Verschmälerung (10) ausbildende rückwärtige Randkante auf einer zum Schaft (2) hin gekrümmten Bogenlinie verläuft.

5. Säbelsägeblatt nach Anspruch 3 oder 4, **dadurch gekennzeichnet, dass** die Spitze (6) etwa auf einer durch den Schaft (2) gelegten Längsmittellinie (M) oder bezogen auf die Längsmittellinie (M) auf der zur Brust (3) weisenden Hälfte des Schaftes (2) liegt.

6. Säbelsägeblatt nach einem der Ansprüche 3 bis 5, **dadurch gekennzeichnet, dass** die Verschmälerung (10) länger ist als die von der Stirnkante (7) gebildete Schneide und insbesondere mindestens zweimal, dreimal oder fünfmal so lang ist.

7. Säbelsägeblatt nach einem der Ansprüche 3 bis 6, **dadurch gekennzeichnet, dass** die Verschmälerung (10) den Schaft (2) im Bereich der Stirnkante (7) auf etwa die Hälfte seiner Breite im an den Einspannabschnitt angrenzenden Bereich verschmälert.

8. Säbelsägeblatt mit einem Einspannende (1) zum Einspannen in ein Futter einer Antriebsmaschine, mit einem auf seiner Brust (3) eine Metallsägeverzahnung (5) aufweisenden Schaft (2), mit einer stumpfwinklig an das vom Einspannende (1) weg weisende Ende der Sägeverzahnung (5) angrenzenden schrägen, als Schneide ausgebildeten Stirnkante (7), an die unter Ausbildung einer Spitze (6) ein eine rückwärtige Sägeverzahnung (11) aufweisender Rücken (4) des Schaftes (2) angrenzt, wobei die rückwärtige Sägeverzahnung (11) eine Metallsägeverzahnung ist und die Spitze (6) derart gerundet ist, dass die von einer Fase (8) gebildete Schneide (7) in eine Kreiszylindermantelfläche ausläuft, durch welchen Kreiszylinder eine die Fase (8) begrenzende Begrenzungslinie (9) verläuft.

9. Säbelsägeblatt nach einem der vorangehenden Ansprüche, **dadurch gekennzeichnet, dass** der Rücken (4) parallel zur im Wesentlichen geradlinigen Brust (3) verläuft.

10. Säbelsägeblatt nach einem der vorangehenden Ansprüche, **dadurch gekennzeichnet, dass** die geradlinig verlaufende Sägeverzahnung (5) der Brust (3) mit einem Winkel (α) von 110° bis 150°, bevorzugt 130°, in die Stirnkante (7) übergeht.

11. Säbelsägeblatt nach einem der vorangehenden Ansprüche, **dadurch gekennzeichnet, dass** der Fasenwinkel (β) im Bereich zwischen 15° und 35°, bevorzugt zwischen 20° und 25°, beträgt.

12. Säbelsägeblatt nach einem der vorangehenden Ansprüche, **dadurch gekennzeichnet, dass** die Länge der Verzahnung mindestens 150 mm beträgt und/oder dass der Abstand zweier benachbarter Zahnspitzen der Verzahnung (5, 11) im Bereich zwischen 1,5 mm und 2 mm liegt.

## Claims

1. Reciprocating saw blade having a clamping end (1) for clamping into a chuck of a drive machine, having a shaft (2) comprising a metal saw toothing (5) on the front thereof (3), having an oblique front edge (7) formed as a cutting edge adjoining at an obtuse angle to the end of the saw toothing (5) pointing away from the clamping end (1), to which front edge a back (4) of the shaft (2) adjoins to form a rounded tip (6), **characterised in that** the narrow edge of the shaft (2) in the region of the tip (6) runs on a portion of a circular cylindrical surface, that the cutting edge (7) lies in a broad side of the shaft (2), and that a boundary line (9) of the chamfer (8) forming the cutting edge running parallel to the cutting edge (7) goes approximately through the centre of the circular cylinder in the opposite broad side.

2. Reciprocating saw blade according to claim 1, **characterised in that** the radius of curvature of the tip (6) is in the range between 2 mm and 3 mm.

3. Reciprocating saw blade according to any of the preceding claims, **characterised in that** the shaft (2) has a narrowing (10) in its end region adjacent to the tip (6).

4. Reciprocating saw blade according to claim 3, **characterised in that** the rear edge forming the narrowing (10) runs on a curved line towards the shaft (2).

5. Reciprocating saw blade according to either claim 3 or claim 4, **characterised in that** the tip (6) approximately on a longitudinal centre line (M) placed through the shaft (2) or based on the longitudinal centre line (M) lies on the half of the shaft (2) facing the front (3).

6. Reciprocating saw blade according to any of claims 3 to 5, **characterised in that** the narrowing (10) is longer than the cutting edge formed by the front edge (7) and in particular is at least twice, three times or five times as long.

7. Reciprocating saw blade according to any of claims 3 to 6, **characterised in that** the narrowing (10) narrows the shaft (2) in the region of the front edge (7) to approximately half its width in the region adjacent to the clamping portion.

8. Reciprocating saw blade having a clamping end (1) for clamping into a chuck of a drive machine, having a shaft (2) comprising a metal saw toothing (5) on the front (3) thereof, having an oblique front edge (7) formed as a cutting edge adjoining at an obtuse angle to the end of the saw toothing (5) pointing away from the clamping end (1), to which front edge a back (4) of the shaft (2) comprising a rear saw toothing (11) adjoins to form a tip (6), wherein the rear saw toothing (11) is a metal saw toothing and the tip (6) is rounded such that the cutting edge (7) formed by a chamfer (8) ends in a circular cylinder surface, through which circular cylinder a boundary line (9) delimiting the chamfer (8) runs.

9. Reciprocating saw blade according to any of the preceding claims, **characterised in that** the back (4) runs parallel to the substantially rectilinear front (3).

10. Reciprocating saw blade according to any of the preceding claims, **characterised in that** the rectilinear saw toothing (5) of the front (3) passes into the front edge (7) with an angle (α) of 110° to 150°, preferably 130°.

11. Reciprocating saw blade according to any of the preceding claims, **characterised in that** the chamfer angle (β) is in the range between 15° and 35°, preferably between 20° and 25°.

12. Reciprocating saw blade according to any of the preceding claims, **characterised in that** the length of the toothing is at least 150 mm and/or that the distance between two adjacent tooth tips of the toothing (5, 11) is in the range between 1.5 mm and 2 mm.

## Revendications

1. Lame de scie sabre avec une extrémité de serrage (1) pour le serrage dans un mandrin d'une machine d'entraînement, avec une tige (2) présentant sur son devant (3) une denture de scie métallique (5), avec un bord frontal oblique (7) formant arête de coupe, qui jouxte avec un angle obtus l'extrémité de la denture de scie (5) à l'opposé de l'extrémité de serrage (1) et qui est jouxtée, sous formation d'une pointe arrondie (6), par un dos (4) de la tige (2), **caractérisée en ce que** le bord étroit de la tige (2) dans la zone de la pointe (6) s'étend sur une partie d'une surface d'enveloppe cylindrique circulaire, l'arête de coupe (7) se situe dans un côté large de la tige (2) et une ligne de délimitation (9) du biseau (8) formant l'arête de coupe, dans le côté large opposé, qui s'étend parallèlement à l'arête de coupe (7), passe approximativement par le centre du cylindre circulaire.

2. Lame de scie sabre selon la revendication 1, **caractérisée en ce que** le rayon de courbure de la pointe (6) se situe dans la plage comprise entre 2 mm et 3 mm.

3. Lame de scie sabre selon l'une des revendications précédentes, **caractérisée en ce que** la tige (2) présente un rétrécissement (10) dans sa zone d'extrémité jouxtant la pointe (6).

4. Lame de scie sabre selon la revendication 3, **caractérisée en ce que** le bord arrière formant le rétrécissement (10) s'étend sur une ligne d'arc courbée vers la tige (2).

5. Lame de scie sabre selon la revendication 3 ou 4, **caractérisée en ce que** la pointe (6) se trouve approximativement sur un axe médian longitudinal (M) passant par la tige (2) ou, par rapport à l'axe médian longitudinal (M), sur la moitié de la tige (2) qui est vers le devant (3).

6. Lame de scie sabre selon l'une des revendications 3 à 5, **caractérisée en ce que** le rétrécissement (10) est plus long que l'arête de coupe formée par le bord frontal (7) et en particulier est au moins deux fois, trois fois ou cinq fois plus long.

7. Lame de scie sabre selon l'une des revendications 3 à 6, **caractérisée en ce que** le rétrécissement (10) rétrécit la tige (2) dans la région du bord frontal (7) à environ la moitié de sa largeur dans la zone jouxtant la partie de serrage.

8. Lame de scie sabre avec une extrémité de serrage (1) pour le serrage dans un mandrin d'une machine d'entraînement, avec une tige (2) présentant sur le devant (3) une denture de scie métallique (5), avec une arête frontale (7) oblique formant arête de coupe, qui jouxte avec un angle obtus l'extrémité de la denture de scie (5) à l'opposé de l'extrémité de serrage (1) et qui est jouxtée, sous formation d'une pointe (6), par un dos (4) de la tige (2) présentant une denture de scie arrière (11), dans laquelle la denture de scie arrière (11) est une denture de scie métallique et la pointe (6) est arrondie de telle manière que l'arête de coupe (7) formée par un biseau (8) se termine en une surface d'enveloppe cylindrique circulaire, cylindre circulaire à travers lequel s'étend une ligne de délimitation (9) délimitant le biseau (8).

9. Lame de scie sabre selon l'une des revendications précédentes, **caractérisée en ce que** le dos (4) s'étend parallèlement au devant (3) qui est sensiblement rectiligne.

10. Lame de scie sabre selon l'une des revendications précédentes, **caractérisée en ce que** la denture de scie du devant (3) qui s'étend de manière rectiligne (5) se raccorde au bord frontal (7) selon un angle (α) de 110° à 150°, de préférence 130°.

11. Lame de scie sabre selon l'une des revendications précédentes, **caractérisée en ce que** l'angle de biseau (β) est dans la plage comprise entre 15° et 35°, de préférence entre 20° et 25°.

12. Lame de scie sabre selon l'une des revendications précédentes, **caractérisée en ce que** la longueur de la denture est d'au moins 150 mm et/ou que la distance entre deux pointes de dents adjacentes de la denture (5, 11) est dans la plage comprise entre 1,5 mm et 2 mm.
